# EUROPÄISCHE PATENTSCHRIFT

(11) **EP 3 018 375 B1**
(45) Veröffentlichungstag und Bekanntmachung des Hinweises auf die Patenterteilung: **02.12.2020**
(21) Anmeldenummer: 15191447.0
(22) Anmeldetag: 26.10.2015
(51) Int. Cl.: F16C 33/66

(54) **WÄLZLAGERSCHMIERUNG EINER WINDENERGIEANLAGE**
ROLLER BEARING LUBRICATION OF A WIND POWER FACILITY
LUBRIFICATION DE PALIER À ROULEMENT D'UNE ÉOLIENNE

(30) Priorität: 07.11.2014 DE 102014222790; 24.06.2015 DE 102015008074
(43) Veröffentlichungstag der Anmeldung: 11.05.2016
(73) Patentinhaber: Siemens Gamesa Renewable Energy Service GmbH, 22297 Hamburg (DE)
(72) Erfinder: EUSTERBARKEY, Carsten, 25813 Simonsberg (DE); SIENKNECHT, Gunnar, 24594 Hohenwestedt (DE); RÜHS, Christian, 24848 Kropp (DE); HILDEBRANDT, Arved, 24118 Kiel (DE)
(74) Vertreter: Wallinger Ricker Schlotter Tostmann

(56) Entgegenhaltungen:
- EP-A1- 2 233 760
- EP-B1- 1 801 415
- EP-B1- 1 801 415
- JP-A- 2005 207 264
- JP-A- 2008 032 090
- US-A- 3 722 967
- US-A1- 2004 240 997

## Beschreibung

Die Erfindung betrifft ein Wälzlager einer Windenergieanlage, wobei die Windenergieanlage eine Welle umfasst, die über das Wälzlager gelagert ist, wobei das Wälzlager einen Rotor, der mit der Welle der Windenergieanlage verbunden ist oder verbindbar ist, aufweist, wobei das Wälzlager einen Stator aufweist.

Die Erfindung betrifft ferner ein Verfahren zum Betreiben einer Windenergieanlage, wobei die Windenergieanlage ein Wälzlager umfasst, wobei das Wälzlager mit Schmierfett geschmiert wird.

Wälzlager und Verfahren zum Betreiben einer Windenergieanlage, wobei die Windenergieanlage ein Wälzlager umfasst, sind beispielsweise aus EP 1 801 415 B1 bekannt. Beispielsweise werden Wälzlager bei der Lagerung einer Generatorwelle eines Generators, der im Maschinenhaus einer Windenergieanlage angeordnet ist, verwendet. Entsprechende Lager können mit Fett geschmiert werden oder mit Öl. Es ist bekannt, eine zeitabhängige Nachschmierung stattfinden zu lassen, wobei in vorgegebenen Zeitintervallen, beispielsweise alle fünf Stunden, eine vorbestimmte Menge an Schmierfett, beispielsweise wenige Kubikzentimeter, in ein Lager eines Generators eingespritzt wird.

EP 1 801 415 B1 befasst sich damit, die Schmierfettzufuhr in Abhängigkeit der Drehzahl, der Umdrehungsanzahl und/oder der Temperatur zu steuern.

Fettgeschmierte Lager sind aufgrund der Zähigkeit des Schmierstoffes deutlich schwieriger gezielt zu schmieren. Aus diesem Grunde wird üblicherweise eine Vorratsschmierung verwendet, d.h., dass das Lager mit einer großen Menge Fett befüllt wird. Dies geschieht beispielsweise radial über einen Außenring des Lagers, mittig in den Lagerinnenraum hinein.

Es kann bei hohen Belastungen der Wälzlager sein, dass insbesondere bei auftretenden Schwingungen, entsprechende Lagerbereiche unterversorgt sind, was die Schmierstoffe anbelangt. Dieser Effekt verstärkt sich, wenn das Lager größer wird und die Drehzahl des Lagers gering ist, da der Schmierstoff schwerkraftbedingt nach unten absinkt.

Aus der EP 2 233 760 A1 ist ein zweireihiges Wälzlager zur drehbaren Lagerung eines Maschinenteils bekannt. Dieses Wälzlager umfasst einen Außenring, dessen Außendurchmesser wenigstens 1 m beträgt, einen ersten Innenring, einen zweiten Innenring sowie einen Satz von ersten und zweiten Wälzkörpern, die zwischen einem Außenring und dem ersten und zweiten Innenring angeordnet sind. Es ist eine erste Schmierfettzuführung zur Versorgung der ersten Wälzkörper und eine zweite Schmierfettzuführung zur Versorgung der zweiten Wälzkörper vorhanden.

Es ist Aufgabe der vorliegenden Erfindung, ein Wälzlager einer Windenergieanlage und ein Verfahren zum Betreiben einer Windenergieanlage anzugeben, bei der die Schmierung verbessert wird.

Gelöst wird diese Aufgabe durch ein Wälzlager einer Windenergieanlage, wobei die Windenergieanlage eine Welle umfasst, die über das Wälzlager gelagert ist und die von einem Windrotor angetrieben wird, wobei das Wälzlager einen Rotor, der mit der Welle der Windenergieanlage verbunden ist, aufweist, wobei das Wälzlager einen Stator aufweist, wobei eine Schmierfetteinbringvorrichtung in dem Stator aufgenommen ist, wobei das Wälzlager zudem mehrere Wälzkörper aufweist, die zwischen dem Stator und dem Rotor angeordnet sind, wobei die Schmierfetteinbringvorrichtung eine Austrittsöffnung für Schmierfett aufweist, die gegen eine Laufbahn des Stators oder Rotors oder eine Lauffläche wenigstens eines Wälzkörpers ausgerichtet ist.

Bei der Welle handelt es sich um eine Rotorwelle.

Durch das Ausrichten der Austrittsöffnung gegen eine Laufbahn des Stators oder des Rotors ist eine sehr gezielte Schmierung des Wälzlagers mit einem Schmierfett möglich.

Vorzugsweise ist die Schmierfetteinbringvorrichtung eine Schmierfetteinspritzvorrichtung .

Vorzugsweise wird das Schmierfett auf die Laufbahn eines Lagerinnenrings des Wälzlagers, insbesondere des Rotors des Wälzlagers, aufgebracht bzw. gespritzt.

Vorzugsweise wird, insbesondere in einem Wälzlager oder Rotorwälzlager, das den Rotorschub oder Windrotorschub aufnimmt, die Seite der Laufbahn des Wälzlagers, insbesondere des Lagerinnenrings des Wälzlagers, mit Schmierfett versehen, die in Schubrichtung des Rotors hinten angeordnet ist. Hierdurch wird der Bereich des Lagers direkt mit Schmierfett versehen, der stärker belastet ist. Es handelt sich hierbei bei einem Luvläufer-Rotor insbesondere um den Teil der Laufbahn des Rotorlagers, der von den Rotorblättern einer Windenergieanlage entfernt bzw. abgewandt liegt. Bei einem Leeläufer handelt es sich insbesondere um den Teil des Rotorlagers oder Wälzlagers, der den Rotorblättern zugewandt ist.

Vorzugsweise ist die Windenergieanlage eine vom Typ der horizontal gelagerten Rotorwellen, das heißt, die Rotorwelle ist im Wesentlichen horizontal ausgerichtet.

Vorzugsweise ist die Austrittsöffnung als Düse ausgebildet, wodurch ein sehr effizientes Einspritzen von Schmierfett ermöglicht ist.

Ferner ist vorzugsweise eine Schmierfettleitung vorgesehen, die an ihrem einen Ende die Austrittsöffnung aufweist, wobei die Schmierfettleitung einen Abschnitt aufweist, der in dem Stator eingebracht ist, wobei insbesondere ein Teil des Abschnitts als Endbereich der Schmierfettleitung ausgebildet ist, wobei insbesondere der Endbereich zu einem weiteren Teil des Abschnitts in einem Winkel von 10° bis 50°, insbesondere 20° bis 40°, abgewinkelt ist. Hierdurch ist eine sehr effiziente Fettung des Wälzlagers möglich. Vorzugsweise liegt der Winkel bei 30° oder ist 30°.

Vorzugsweise ist eine Schmierfettfördereinrichtung vorgesehen, die insbesondere eine Vorrichtung zum Aufbau eines Überdrucks aufweist, wobei die Vorrichtung zum Aufbau eines Überdrucks insbesondere einen Druckspeicher umfasst. Die Schmierfettfördereinrichtung umfasst vorzugsweise die Schmierfetteinbringvorrichtung. Zudem ist vorzugsweise die Vorrichtung zum Aufbau eines Überdrucks eine Pumpe bzw. umfasst eine Pumpe. Die Vorrichtung zum Aufbau eines Überdrucks kann auch als Druckspeicher, insbesondere als Membranspeicher, ausgeführt sein bzw. diesen umfassen.

In einer weiteren bevorzugten Ausführungsform ist eine Schmierfettfördereinrichtung vorgesehen, die eine Vorrichtung zum Aufbau eines Überdrucks aufweist, wobei die Vorrichtung zum Aufbau eines Überdrucks einen Druckschalter und ein Magnetventil umfasst. Die Schmierfettfördereinrichtung umfasst vorzugsweise die Schmierfetteinbringvorrichtung. Vorzugsweise umfasst die Vorrichtung zum Aufbau eines Überdrucks eine Pumpe.
Bei einer Einbringung des Schmierfetts, die auch als Einspritzung bezeichnet werden kann, wird zunächst durch eine Druckaufbauvorrichtung, vorzugsweise die Pumpe, ein ausreichend großer Druck in der Leitung aufgebaut. Dieser wird durch den Druckschalter detektiert.

Nach dem Druckaufbau bis zu einem definierten Schaltpunkt (z.B. von 120 bar), wird das Magnetventil geöffnet und das Einbringen oder die Einspritzung des Schmierfetts erfolgt. Das Ventil bleibt so lange geöffnet, bis der Druck auf einen definierten Rückschaltpunkt (z.B. 90 bar) gefallen ist. Bei Erreichen des Rückschaltpunktes wird das Ventil wieder geschlossen. Danach kann eine weitere Schmierfetteinbringung oder -einspritzung erfolgen, die mit dem oben beschriebenen Druckaufbau beginnt.

Jeder Schmierzyklus gliedert sich bevorzugt in mehrere Schmierfettinjektionen oder -einspritzungen, wobei vorzugsweise jede Injektion oder Einspritzung den oben beschriebenen Druckaufbau und Druckabbau beinhaltet.

Im Anschluss an den Schmierzyklus ist vorzugsweise das Ventil offen zu belassen um den Restdruck in der Schmierstoffleitung abzubauen.

Durch Abbau des Restdruckes wird vermieden, dass es zu ungewollten Reaktionen des Fettes kommt, wie beispielsweise Ablagerung von Additiven oder Ausbluten des Fettes.

Bevorzugt werden mindestens drei, insbesondere vier oder fünf Schmierfettaufbringungen, -injektionen oder -einspritzungen in einem Schmierzyklus, insbesondere kurz, nacheinander durchgeführt.

Wenn vorzugsweise in der Schmierfettfördereinrichtung oder in der Schmierfettleitung ein Ventil, insbesondere ein Rückschlagventil oder ein Magnetventil, vorgesehen ist, kann schlagartig Schmierfett aus der Schmierfettfördereinrichtung, insbesondere aus der Austrittsöffnung der Schmierfetteinbringvorrichtung, herausgespritzt werden. Hierdurch können sich möglicherweise bildende Fettablagerungen oder Propfen effizient beseitigt werden. Das Rückschlagventil oder Magnetventil öffnet hierbei vorzugsweise schlagartig bei Überschreiten einer vorgebbaren Vorspannung oder eines am Druckschalter eingestellten Schaltpunktes.

Vorzugsweise sind mehrere Wälzkörper zwischen dem Rotor und dem Stator vorgesehen, wobei der Abstand der Austrittsöffnung zu einem Wälzkörper weniger als 25 %, insbesondere weniger als 15 %, eines Durchmessers eines Wälzkörpers ist. Hierdurch kann sehr gezielt Schmierfett in das Wälzlager eingebracht werden. Die Prozentangabe kann vorzugsweise relativ zu einem mittleren Durchmesser eines Wälzkörpers sein, beispielsweise dann, wenn ein Wälzkörper verwendet wird, der eine gekrümmte Lauffläche aufweist.

Vorzugsweise ist das Wälzlager mehrreihig ausgebildet, wobei das Wälzlager insbesondere ein Pendelrollenlager ist.

Vorzugsweise bringt die Schmierfetteinbringvorrichtung Schmierfett in einen Bereich oberhalb der Drehachse des Wälzlagers und unterhalb des obersten Zehntels des Wälzlagers ein. Vorzugsweise ist dieses bei einer Rechtsdrehung zwischen 9 Uhr und kurz vor 12 Uhr und besonders bei ca. 10 Uhr. Bei einer Linksdrehung sind die bevorzugten Einbringpositionen zwischen 3 Uhr und kurz nach 12 Uhr, bevorzugt bei 2 Uhr. Hierdurch wird beim Aufwärtsbewegen der Wälzkörper Schmierfett eingebracht, und zwar in einem Bereich, wo üblicherweise wenig Schmierfett vorliegt. Es wird dann der obere Bereich des Wälzlagers zunächst mit frischem Schmierfett versehen, wodurch eine gezielte und effiziente Schmierung ermöglicht ist.

Besonders bevorzugt ist es, wenn die Schmierfetteinbringvorrichtung derart in einer Stirnseite des Wälzlagers angeordnet ist, dass Schmierfett von der Stirnseite von außen in das Wälzlager eingetragen wird und von dort in das Innere des Wälzlagers gelangt oder eingespritzt wird. Eine derartige Schmierung des Lagers ist bevorzugt von außen vorgesehen, da von außen effizient direkt auf die Laufbahn der Wälzkörper geschossen oder eingespritzt werden kann. Der Eintrag des Schmierfetts hat hierbei vorzugsweise eine axiale Bewegungskomponente. Das Innere des Wälzlagers bezeichnet hier bevorzugt den Bereich zwischen den Wälzkörperreihen eines mehrreihigen Wälzlagers, insbesondere eines zweireihigen Wälzlagers. Vorzugsweise erfolgt der Schmierfetteintrag von der in Rotorschubrichtung hinteren Stirnseite des Lagers, d.h. der dem Windrotor abgewandten Stirnseite.

Die korrekte Montage und Ausrichtung der Düse über die Stirnseite des Lagers ist vorzugsweise durch einen Anschlag vorgegeben. Dieser definiert die korrekte Tiefe der Düse oder Düsenzuführung, damit die Düse nicht in den Wälzkontakt gerät, und den korrekten Winkel der Düsenausrichtung (damit das Fett korrekt eingespritzt wird). Der Anschlag wird an dem Rotorlagergehäuse oder den Stator fixiert.

Die Aufgabe wird ferner gelöst durch ein Verfahren zum Betreiben einer Windenergieanlage, wobei die Windenergieanlage ein Wälzlager umfasst und das Wälzlager eine Rotorwelle umfasst, die über das Wälzlager gelagert ist und die von einem Windrotor angetrieben wird, wobei das Wälzlager mit Schmierfett geschmiert wird, das dadurch weitergebildet ist, das das Schmierfett von einer Schmierfetteinbringvorrichtung direkt auf eine Laufbahn des Wälzlagers und/oder auf eine Lauffläche eines Wälzkörpers des Wälzlagers aufgebracht wird.

Hierdurch ist es erfindungsgemäß möglich, mit relativ geringen Mengen an Schmierfett eine gute Schmierung des Wälzlagers zu ermöglichen.

Vorzugsweise wird das Schmierfett von einer Stirnseite des Wälzlagers auf die Laufbahn und/oder die Lauffläche aufgebracht.

Vorzugsweise ist das Aufbringen ein Aufspritzen.

Vorzugsweise ist die Laufbahn eine Laufbahn eines Innenrings des Wälzlagers. Hierbei handelt es sich vorzugsweise um einen Innenring des Rotors des Wälzlagers.

Vorzugsweise wird das Schmierfett kontinuierlich für eine Zeitdauer eingespritzt, die wenigstens einer vollständigen Umdrehung des Rotors entspricht. Hierdurch werden alle Bereiche des Wälzlagers entsprechend mit frischem Schmierfett versehen. Hierbei wird vorzugsweise zum Teil Schmierfett direkt auf eine entsprechende Laufbahn aufgebracht und zum Teil insbesondere auch auf Stirnseiten von Wälzkörpern aufgebracht.

Vorzugsweise wird das Schmierfett diskontinuierlich für eine Zeitdauer eingespritzt, die wenigstens einer vollständigen Umdrehung des Rotors entspricht, wobei das Schmierfett, insbesondere dann eingespritzt wird, wenn zwischen einer Austrittsöffnung der Schmierfetteinbringvorrichtung und der Laufbahn kein Wälzkörper des Wälzlagers angeordnet ist. Dieses ermöglicht bei einer sehr geringen Menge an Schmierfett trotzdem eine ausreichende Schmierung. Hierzu sind vorzugsweise Sensoren vorgesehen, die die Lage der Wälzkörper erfassen bzw. erfassen, wann kein Wälzkörper zwischen der Austrittsöffnung der Schmierfetteinbringvorrichtung und der Laufbahn des Wälzlagers angeordnet ist.

Vorzugsweise geschieht das Einspritzen des Schmierfettes für genau eine vollständige Umdrehung des Rotors. Danach wird eine Pause eingelegt. Später wird dann wieder für eine vollständige Umdrehung eines Rotors Schmierfett eingebracht. Dies kann dann kontinuierlich geschehen oder diskontinuierlich.

Vorzugsweise ist ein Schmierzyklus vorgesehen, in dem für eine erste vorgebbare Zeitdauer Schmierfett aufgebracht wird, woraufhin sich eine Schmierfettaufbringpause anschließt, die kürzer als die erste vorgebbare Zeitdauer ist und dann erneut Schmierfett aufgebracht wird. Hierzu kann vorgesehen sein, Druck bis zu einem vorgebbaren ersten Druck, insbesondere ersten Schaltdruck, in der Schmierfettfördereinrichtung, insbesondere der Schmierfettleitung aufzubauen, um dann ein Ventil, insbesondere Magnetventil, zu öffnen, um Schmierfett auf eine Laufbahn des Wälzlagers und/oder auf eine Lauffläche eines Wälzkörpers des Wälzlagers aufzubringen, Anschließend wird dann bei Erreichen eines zweiten vorgebbaren Drucks, der niedriger ist als der erste vorgebbare Druck, kein Schmierfett mehr aufgebracht. Es schließt sich also eine Schmierfettaufbringpause an.

Vorzugsweise wechseln sich das Aufbringen von Schmierfett und die Schmierfettaufbringpause mehrmals, insbesondere wenigstens 3 mal, vorzugsweise 4 oder 5 mal, hintereinander ab, wobei vorzugsweise anstelle der letzten Schmierfettaufbringpause eine Schmierfettentlastungsphase vorgesehen ist, bei der eine Druckentlastung des Schmierfetts vorgesehen ist.

Das erfindungsgemäße Schmiersystem bzw. die erfindungsgemäße Schmierfetteinbringvorrichtung kann zusätzlich zu einer üblichen Schmierung von Wälzlagern vorgesehen sein. Insbesondere können die Schmierintervalle abhängig von einer Belastung, beispielsweise der Gesamtzahl der Umdrehung und/oder bei entsprechenden Temperaturen, vorgenommen werden oder bei entsprechenden Drehzahlen. Hierzu wird insbesondere auf EP 1 801 415 B1 verwiesen.

Insbesondere kann es bevorzugt sein, die Menge des eingebrachten Schmierfettes in Abhängigkeit des Quadrats einer gemessenen Drehzahl zu steuern und/oder in Abhängigkeit der Temperatur in einer vierten Potenz.

Das Schmierfett hat vorzugsweise eine Fettkonsistenz der NLGI-Klasse von 000 bis 2, insbesondere 00 bis 2, besonders bevorzugt 00 oder 1,5.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1:: einen schematischen Querschnitt durch die Gondel einer bekannten Windenergieanlage,
- Fig. 2:: eine schematische Schnittdarstellung durch ein Wälzlager einer Windenergieanlage in einer erfindungsgemäßen Ausführungsform und
- Fig. 3:: eine schematische Stirnseitenansicht eines weiteren erfindungsgemäßen Wälzlagers.

In den Zeichnungen sind jeweils gleiche oder gleichartige Elemente und/oder Teile mit denselben Bezugsziffern versehen, so dass von einer erneuten Vorstellung jeweils abgesehen wird.

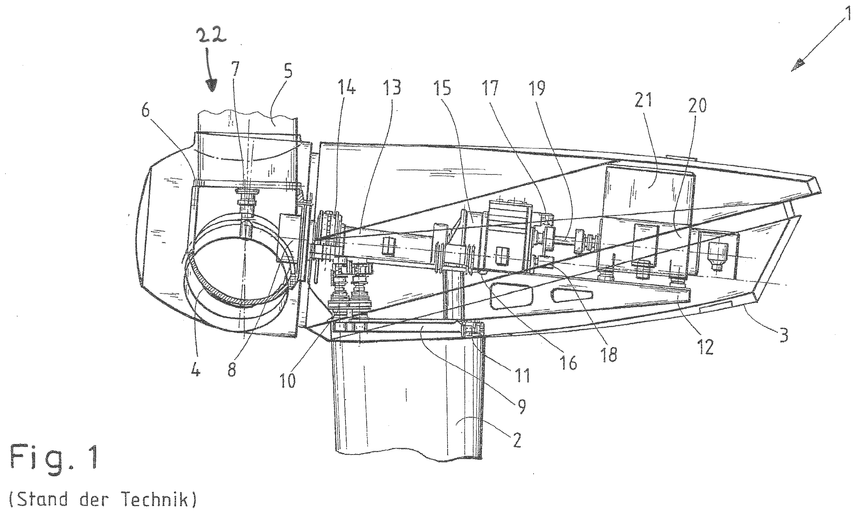

In Fig. 1 ist eine Querschnittsdarstellung durch eine Gondel einer bekannten Windenergieanlage, beispielsweise der Windenergieanlage MD70 der Anmelderin, gezeigt. Es wird insbesondere auf DE 10 2012 205 086 A1 verwiesen.

Die Gondel 3 sitzt auf einem Turm 2, dessen gondelnaher Abschnitt dargestellt ist. Links in Fig. 1 ist ein Windrotor 22 dargestellt mit einer Rotornabe 4, Rotorblättern 5, die nur im Bereich der Rotorblattwurzel dargestellt sind. Die Rotorblätter 5 weisen im Bereich der Rotorblattwurzel jeweils ein Rotorblattlager 6 auf, an das ein Blattverstellantrieb 7 angreift. Der Blattverstellantrieb 7 wird durch eine Steuerung 8 angesteuert und verändert im Betrieb der Windenergieanlage 1 den Blatteinstellwinkel des jeweiligen Rotorblatts 5.

Die Gondel 3 beherbergt einen Maschinenträger 12, der über einen Turmkopfdrehkranz 9 mit dem Turm 2 verbunden ist. Am Turmkopfdrehkranz 9 greifen Windnachführungsmotoren 10 einer Azimutverstellung an, die die Gondel bzw. den Windrotor 22 in Richtung auf die herrschende Windrichtung ausrichten. Hierzu sind vier Windnachführungsmotoren 10 vorhanden, von denen zwei auf der dargestellten Seite angeordnet sind und zwei verdeckt dahinter auf der anderen Seite des Maschinenträgers 12. Ebenfalls greifen am Turmkopfdrehkranz 9 Azimutbremsen 11 an, die der Arretierung der Azimuteinstellung des Windrotors 22 dienen.

Der Windrotor 22 treibt eine Rotorwelle 13 an, die in einem als Wälzlager ausgebildeten Rotorlager 14 drehbar gelagert ist. Bei der Windenergieanlage MD70 der Anmelderin ist das Rotorlager 14 als Festlager ausgebildet, das nur wenige Millimeter Spiel in axialer Richtung der Rotorwelle 13 erlaubt. Die Rotorwelle 13 treibt ein Getriebe 15, das die langsame Drehbewegung der Rotorwelle in eine schnelle Drehbewegung einer Generatorwelle 19, die mit Kupplungen dargestellt ist, umsetzt, die wiederum einen Generator 20 zur Stromerzeugung antreibt, der mit einem Wärmetauscher 21 ausgestattet ist. Alternativ ist die Erfindung auch vorteilhaft anwendbar bei der Lagerung von Rotorwellen mit zwei Rotorlagern. Sowohl das vordere als auch das hintere Lager kann vorteilhaft als Festlager zur Aufnahme des Rotorschubs ausgebildet sein.

Das Getriebe 15 weist außerdem eine Rotorbremse 17 und einen Schleifringüberträger 18 auf sowie zwei elastische Getriebeaufhängungen bzw. Auflager 16, von denen eines in Fig. 1 dargestellt ist, während sich das andere symmetrisch auf der anderen Seite des Getriebes 15 befindet und somit durch das Getriebe 15 verdeckt ist. Das Auflager 16 bzw. die elastische Getriebeaufhängung ist konventionell gestaltet und besteht aus hohlzylindrischen Elastomerkörpern aus zwei halbzylindrischen Teilkörpern, die um einen zylindrischen Bolzen herum angeordnet sind. Mit seinen zylindrischen Lagern, deren Zylinderachse parallel zur Rotorwelle 13 ausgerichtet ist, handelt es sich bei dem Auflager 16 um ein Loslager, da es aufgrund seiner Weichheit in dieser Richtung nur wenig Rotorschubkraft in Richtung der Rotorwellenachse aufnimmt.

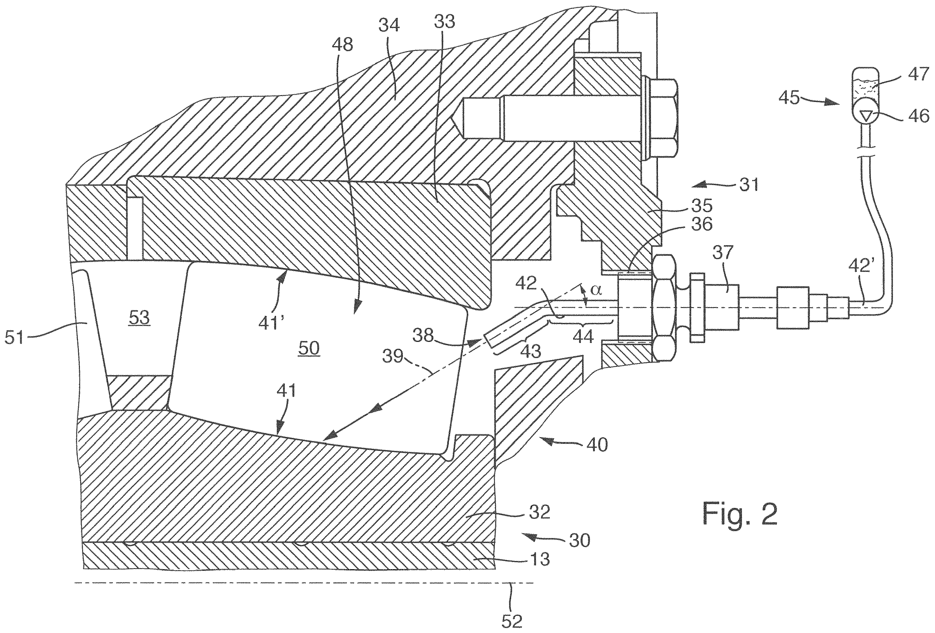

Fig. 2 zeigt schematisch ein erfindungsgemäßes Wälzlager 40 in einer Schnittdarstellung in einem Ausschnitt. Das Wälzlager 40 weist einen Rotor 30 und einen Stator 31 auf. Der Rotor 30 umfasst eine Rotorwelle 13, an die ein Lagerinnenring 32 angebracht ist. Die Rotorwelle 13 dreht sich um die Drehachse 52. Die Drehachse 52 ist nicht maßstabsgerecht in Fig. 2 eingezeichnet.

Der Rotor 30 bzw. der Lagerinnenring 32 des Rotors 30 weist eine Laufbahn 41 auf, auf der Wälzkörper 50 und 51 mit Laufflächen 48 abrollen. Es handelt sich somit um eine ausschnittsweise Darstellung eines mehrreihigen Wälzlagers. Entsprechend ist eine Laufbahn 41' an einem Lageraußenring 33 des Stators 31 vorgesehen. Der Lageraußenring 33 ist mit dem Gehäuse 34 verbunden.

Auf dem Gehäuse 34 ist eine als Deckel ausgebildete Stirnseite 35 vorgesehen. Die Wälzkörper 50, 51 sind in diesem Ausführungsbeispiel tonnenförmig ausgebildet. Diese können allerdings auch kugelförmig sein oder zylinderförmig.

Es sind mehrere Wälzkörper 50 bzw. 51 vorgesehen, die in dem Lagerinnenraum bzw. im Inneren 53 des Wälzlagers angeordnet sind, und zwar vorzugsweise mit Abständen zueinander.

Um eine effiziente Schmierung mit Schmierfett 39 vorzusehen, ist eine Schmierfetteinbringvorrichtung 37 vorgesehen, die in der Stirnseite 35 in einer Verschraubung 36 eingebracht ist. Die Schmierfetteinbringvorrichtung 37 hat eine Austrittsöffnung 38, die in Richtung der Laufbahn 41 des Lagerinnenrings 32 zeigt. Aus der Austrittsöffnung 38 tritt Schmierfett 39 in Pfeilrichtung aus. Hierbei kann, falls es sich um einen kontinuierlichen Austritt von Schmierfett 39 über einen gewissen Zeitabschnitt handelt, zum Teil direkt Schmierfett auf die Laufbahn 41 gespritzt werden und zum Teil auch auf die Wälzflächen des Wälzkörpers 50 sowie auf die Stirnseite des Wälzkörpers 50.

Es ist ein Winkel α von vorzugsweise 30° zwischen einem Teil 43 der Schmierfettleitung, nämlich dem Endteil, das auch die Austrittsöffnung 38 aufweist, und einem weiteren Teil 44, der näher zu der Verschraubung 36 liegt, vorgesehen.

Mit der Schmierfetteinbringvorrichtung 37 verbunden ist eine Schmierfettleitung 42, über die die Schmierfetteinbringvorrichtung 37 mit einer Vorrichtung 46 zum Aufbau eines Überdrucks, in diesem Beispiel in Form einer Pumpe, verbunden ist. An die Pumpe schließt sich ein Schmierfettreservoir 47 an.

Insgesamt handelt es sich um eine Schmierfettfördereinrichtung 45, die die Vorrichtung 46 zum Aufbau eines Überdrucks, das Schmierfettreservoir 47, die Schmierfettleitung 42, die Schmierfetteinbringvorrichtung 37 und die Schmierfettleitung 42 umfassen kann.

Die Schmierfetteinbringvorrichtung 37 ist vorzugsweise in einem oberen Bereich des Wälzlagers 40 an der Stirnseite 35 eingebracht, damit Schmierfett 39 in einer oberen Hälfte des Wälzlagers 40 eingetragen bzw. eingespritzt werden kann. Hierdurch werden insbesondere kritische Teile des Wälzlagers 40 mit ausreichend Schmierfett 39 versehen.

Der Windrotor 22 überträgt den Rotorschub auf den Rotor 30 des Wälzlagers 40. Die Schmierfetteinbringvorrichtung 37 ist vorzugsweise auf der dem Windrotor 22 abgewandten Stirnseite des Wälzlagers 40 angeordnet, da dieser Bereich des Wälzlagers 40 durch den Rotorschub höher belastet ist.

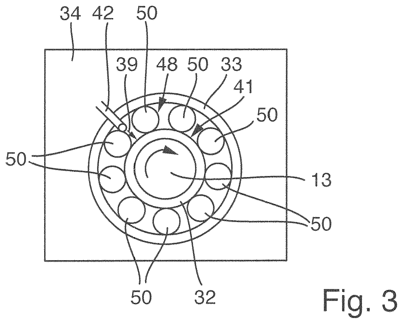

Fig. 3 zeigt eine schematische Ansicht von der Stirnseite des Wälzlagers 40, wobei die Stirnseite selbst entfernt wurde. Es handelt sich um die Stirnseite, die der zum Windrotor 22 mit der Rotorblättern abgewandten Seite entspricht. Hierdurch wird effizient Schmierfett 39 an der Seite des Wälzlagers 40 eingebracht, die durch den Schub des Rotors 30, bedingt durch den Windeintrag auf die Rotorblätter, am stärksten belastet ist.

Es ist in Fig. 3 sehr schematisch dargestellt, dass die Schmierfettleitung 42 von der Stirnseite kommend schräg Schmierfett 39 auf die Laufbahn 41 des Lagerinnenringes 32 aufspritzt. Die Schmierfettleitung 42 soll relativ zur Zeichenebene erhöht sein, um eine Kollision mit den Wälzkörpern 50 zu vermeiden. In diesem Ausführungsbeispiel sind 9 Wälzkörper 50 vorgesehen, die sich zwischen dem Lagerinnenring 32 und dem Lageraußenring 33 bewegen. Der Lagerinnenring 32 mit der Rotorwelle 13 dreht sich in Pfeilrichtung. Die Schmierfettleitung 42 ist vorzugsweise dann in einer 10 Uhr-Stellung angeordnet, um in der Aufwärtsbewegung des Lagerinnenringes 32 durch Kontakt mit den Wälzkörpern 50 entsprechend eine Schmierung im oberen Bereich des Wälzlagers 40 vorzusehen. Vorzugsweise ist bei der angezeigten Drehrichtung die Schmierfettleitung 42 zwischen 9 Uhr und 11 Uhr, insbesondere vorzugsweise zwischen 9 Uhr und 10 Uhr, angeordnet.

In einer Drehrichtung, die andersherum wäre, wäre die vorzugsweise Anordnung der Schmierfettleitung 42 bzw. des Schmierfetteintrags auf den Lagerinnenring 32 zwischen 3 Uhr und 1 Uhr, insbesondere vorzugsweise zwischen 3 Uhr und 2 Uhr.

In einer Ausführungsform der Erfindung wird Schmierfett vorzugsweise von außen, d.h. von einer Stirnseite, in das Lager eingetragen. Das Fett bewegt sich dann bevorzugt durch die Bewegung der Wälzkörper und des Lagerinnenringes relativ zum Lageraußenring auch in das Innere des Lagers, d.h. bei mehrreihigen Wälzlagern vorzugsweise in den Bereich zwischen den Wälzkörperreihen.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" oder "bevorzugt" gekennzeichnet sind, als fakultative Merkmale zu verstehen.

### Bezugszeichenliste

- 1: Windenergieanlage
- 2: Turm
- 3: Gondel
- 4: Rotornabe
- 5: Rotorblatt
- 6: Rotorblattlager
- 7: Blattverstellantrieb
- 8: Steuerung der Blattverstellung
- 9: Turmkopfdrehkranz
- 10: Windnachführungsmotoren
- 11: Azimutbremsen
- 12: Maschinenträger
- 13: Rotorwelle
- 14: Rotorlager
- 15: Getriebe
- 16: elastische Getriebeaufhängung
- 17: Rotorbremse
- 18: Schleifringüberträger
- 19: Generatorwelle mit Kupplungen
- 20: Generator
- 21: Wärmetauscher
- 22: Windrotor
- 30: Rotor
- 31: Stator
- 32: Lagerinnenring
- 33: Lageraußenring
- 34: Gehäuse
- 35: Stirnseite
- 36: Verschraubung
- 37: Schmierfetteinbringvorrichtung
- 38: Austrittsöffnung
- 39: Schmierfett
- 40: Wälzlager
- 41, 41': Laufbahn
- 42: Schmierfettleitung
- 43: Teil der Schmierfettleitung
- 44: weiterer Teil der Schmierfettleitung
- 45: Schmierfettfördereinrichtung
- 46: Vorrichtung zum Aufbau eines Unterdrucks
- 47: Schmierfettreservoir
- 48: Lauffläche
- 50: Wälzkörper
- 51: Wälzkörper
- 52: Drehachse
- 53: Inneres des Wälzlagers

- α: Winkel

## Patentansprüche

1. Wälzlager (40) einer Windenergieanlage (1), wobei die Windenergieanlage (1) eine Rotorwelle (13) umfasst, die über das Wälzlager (40) gelagert ist und die von einem Windrotor (22) angetrieben wird, wobei das Wälzlager (40) einen Rotor (30), der mit der Rotorwelle (13) der Windenergieanlage verbunden ist, aufweist, wobei das Wälzlager (40) einen Stator (31) aufweist, wobei eine Schmierfetteinbringvorrichtung (37) in dem Stator (31) aufgenommen ist, wobei das Wälzlager (40) zudem mehrere Wälzkörper (50, 51) aufweist, die zwischen dem Stator (31) und dem Rotor (30) angeordnet sind, wobei die Schmierfetteinbringvorrichtung (37) eine Austrittsöffnung (38) für Schmierfett (39) aufweist, die gegen eine Laufbahn (41, 41') des Stators (31) oder Rotors (30) oder eine Lauffläche (48) wenigstens eines Wälzkörpers (50, 51) ausgerichtet ist.

2. Wälzlager (40) nach Anspruch 1, **dadurch gekennzeichnet, dass** die Austrittsöffnung (38) als Düse ausgebildet ist.

3. Wälzlager (40) nach Anspruch 1 oder 2, **dadurch gekennzeichnet, dass** eine Schmierfettleitung (42) vorgesehen ist, die an ihrem einen Ende die Austrittsöffnung (38) aufweist, wobei die Schmierfettleitung (42) einen Abschnitt aufweist, der in dem Stator (31) eingebracht ist, wobei insbesondere ein Teil (43) des Abschnitts als Endbereich der Schmierfettleitung (42) ausgebildet ist, wobei der Endbereich zu einem weiteren Teil (44) des Abschnitts in einem Winkel (α) von 10° bis 50°, insbesondere 20° bis 40°, abgewinkelt ist.

4. Wälzlager (40) nach einem der Ansprüche 1 bis 3, **dadurch gekennzeichnet, dass** eine Schmierfettfördereinrichtung (45) vorgesehen ist, die insbesondere eine Vorrichtung (46) zum Aufbau eines Überdrucks aufweist, wobei insbesondere die Vorrichtung (46) zum Aufbau eines Überdrucks einen Druckspeicher umfasst.

5. Wälzlager (40) nach Anspruch 3 oder 4, **dadurch gekennzeichnet, dass** in der Schmierfettfördereinrichtung (45) oder in der Schmierfettleitung (42, 42') ein Ventil, insbesondere ein Rückschlagventil, vorgesehen ist, wobei insbesondere die Vorrichtung (46) zum Aufbau eines Überdrucks einen Druckschalter und ein Magnetventil umfasst.

6. Wälzlager (40) nach einem der Ansprüche 1 bis 5, **dadurch gekennzeichnet, dass** mehre Wälzkörper (50, 51) zwischen dem Rotor (30) und dem Stator (31) vorgesehen sind, wobei der Abstand der Austrittsöffnung (38) zu einem Wälzkörper (50) weniger als 25 %, insbesondere weniger als 15 %, eines Durchmessers eines Wälzkörpers (50, 51) ist, wobei insbesondere das Wälzlager (40) mehrreihig ausgebildet ist, wobei das Wälzlager (40) insbesondere ein Pendelrollenlager ist.

7. Wälzlager (40) nach einem der Ansprüche 1 bis 6, **dadurch gekennzeichnet, dass** die Schmierfetteinbringvorrichtung (37) in einem Bereich oberhalb der Drehachse (52) des Wälzlagers (40) und unterhalb des obersten Zehntels des Wälzlagers (40) Schmierfett (39) einbringt.

8. Wälzlager (40) nach einem der Ansprüche 1 bis 7, **dadurch gekennzeichnet, dass** die Schmierfetteinbringvorrichtung (37) derart in einer Stirnseite (35) des Wälzlagers (40) angeordnet ist, das Schmierfett (39) von der Stirnseite (35) von außen in das Wälzlager (40) eingetragen wird und von dort in das Innere (53) des Wälzlagers (40) gelangt.

9. Verfahren zum Betreiben einer Windenergieanlage, wobei die Windenergieanlage ein Wälzlager (40) umfasst, wobei das Wälzlager (40) einen Rotor (30), der mit einer Rotorwelle (13) der Windenergieanlage, verbunden ist, aufweist, wobei die Rotorwelle (13) über das Wälzlager gelagert ist und das Wälzlager (40)mit Schmierfett (39) geschmiert wird, **dadurch gekennzeichnet, dass** das Schmierfett (39) von einer Schmierfetteinbringvorrichtung (37) direkt auf eine Laufbahn (41, 41') des Wälzlagers (40) und/oder auf eine Lauffläche (48) eines Wälzkörpers (50, 51) des Wälzlagers (40) aufgebracht wird.

10. Verfahren nach Anspruch 9, **dadurch gekennzeichnet, dass** das Schmierfett (39) von einer Stirnseite (35) des Wälzlagers (40) auf die Laufbahn (41, 41') und/oder die Lauffläche (48) aufgebracht wird.

11. Verfahren nach Anspruch 9 oder 10, **dadurch gekennzeichnet, dass** das Aufbringen ein Aufspritzen ist.

12. Verfahren nach einem der Ansprüche 9 bis 11, **dadurch gekennzeichnet, dass** die Laufbahn (41) eine Laufbahn (41) eines Innenrings (32) des Wälzlagers (40) ist.

13. Verfahren nach einem der Ansprüche 9 bis 11, **dadurch gekennzeichnet, dass** das Schmierfett (39) kontinuierlich für eine Zeitdauer eingespritzt wird, die wenigstens einer vollständigen Umdrehung des Rotors (30) entspricht.

14. Verfahren nach einem der Ansprüche 9 bis 13, **dadurch gekennzeichnet, dass** das Schmierfett (39) diskontinuierlich für eine Zeitdauer eingespritzt wird, die wenigstens einer vollständigen Umdrehung des Rotors (30) entspricht, wobei das Schmierfett (39), insbesondere dann eingespritzt wird, wenn zwischen einer Austrittsöffnung (38) der Schmierfetteinbringvorrichtung (37) und der Laufbahn (41, 41') kein Wälzkörper (50, 51) des Wälzlagers (40) angeordnet ist.

15. Verfahren nach einem der Ansprüche 9 bis 14, **dadurch gekennzeichnet, dass** ein Schmierzyklus vorgesehen ist, in dem für eine erste vorgebbare Zeitdauer Schmierfett aufgebracht wird, woraufhin sich eine Schmierfettaufbringpause anschließt, die kürzer als die erste vorgebbare Zeitdauer ist und dann erneut Schmierfett aufgebracht wird, wobei insbesondere das Aufbringen von Schmierfett und die Schmierfettaufbringpause mehrmals, insbesondere wenigstens 3 mal, hintereinander abwechseln, wobei vorzugsweise anstelle der letzten Schmierfettaufbringpause eine Schmierfettentlastungsphase vorgesehen ist, bei der eine Druckentlastung des Schmierfetts vorgesehen ist.

## Claims

1. A rolling bearing (40) of a wind energy installation (1), wherein the wind energy installation (1) comprises a rotor shaft (13) which is supported via the rolling bearing (40) and which is driven by a wind rotor (22), wherein the rolling bearing (40) comprises a rotor (30) which is connected to the rotor shaft (13) of the wind energy installation, wherein the rolling bearing (40) comprises a stator (31), wherein a device (37) for introducing lubricating grease is accommodated in the stator (31), wherein the rolling bearing (40) further comprises a plurality of rolling bodies (50, 51) which are arranged between the stator (31) and the rotor (30), wherein the device (37) for introducing lubricating grease has an outlet opening (38) for lubricating grease (39) which is oriented against a raceway (41, 41') of the stator (31) or of the rotor (30) or a running surface (48) of at least one of the rolling bodies (50, 51).

2. The rolling bearing (40) according to claim 1, **characterised in that** the outlet opening (38) is constructed as a nozzle.

3. The rolling bearing (40) according to claim 1 or 2, **characterised in that** a lubricating grease line (42) is provided which has the outlet opening (38) at one of its ends, wherein the lubricating grease line (42) comprises a section which is introduced into the stator (31), wherein in particular a portion (43) of this section is constructed as an end region of the lubricating grease line (42), wherein the end region is oriented at an angle (α) of 10° to 50°, in particular 20° to 40°, with respect to a further portion (44) of this section.

4. The rolling bearing (40) according to any one of the claims 1 to 3, **characterised in that** a conveying device (45) for conveying lubricating grease is provided, which in particular comprises a device (46) for building up an overpressure, in particular wherein the device (46) for building up an overpressure comprises a pressure reservoir.

5. The rolling bearing (40) according to claim 3 or 4, **characterised in that** a valve, in particular a non-return valve, is provided in the conveying device (45) for conveying lubricating grease or in the lubricating grease line (42, 42'), in particular wherein the device (46) for building up an overpressure comprises a pressure switch and a solenoid valve.

6. The rolling bearing (40) according to any one of the claims 1 to 5, **characterised in that** a plurality of rolling bodies (50, 51) are provided between the rotor (30) and the stator (31), wherein the distance between the outlet opening (38) and a rolling body (50) is less than 25%, in particular less than 15%, of a diameter of a rolling body (50, 51), in particular wherein the rolling bearing (40) is of a multi-row construction, in particular wherein the rolling bearing (40) is a spherical roller bearing.

7. The rolling bearing (40) according to any one of the claims 1 to 6, **characterised in that** the device (37) for introducing lubricating grease introduces lubricating grease (39) in a region above the axis of rotation (52) of the rolling bearing (40) and below the uppermost tenth of the rolling bearing (40).

8. The rolling bearing (40) according to any one of the claims 1 to 7, **characterised in that** the device (37) for introducing lubricating grease is arranged in an end face (35) of the rolling bearing (40) in such a way that the lubricating grease (39) is introduced into the rolling bearing (40) from the outside from the end face (35) and from there passes into the interior (53) of the rolling bearing (40).

9. A method of operating a wind energy installation, wherein the wind energy installation comprises a rolling bearing (40), wherein the rolling bearing (40) comprises a rotor (30) which is connected to a rotor shaft (13) of the wind energy installation, wherein the rotor shaft (13) is supported via the rolling bearing and the rolling bearing (40) is lubricated with lubricating grease (39), **characterised in that** the lubricating grease (39) is applied by a device (37) for introducing lubricating grease directly to a raceway (41, 41') of the rolling bearing (40) and/or to a running surface (48) of a rolling body (50, 51) of the rolling bearing (40).

10. The method according to claim 9, **characterised in that** the lubricating grease (39) is applied from an end face (35) of the rolling bearing (40) to the raceway (41, 41') and/or the running surface (48).

11. The method according to claim 9 or 10, **characterised in that** the applying is a spraying action.

12. The method according to any one of the claims 9 to 11, **characterised in that** the raceway (41) is a raceway (41) of an inner ring (32) of the rolling bearing (40).

13. The method according to any one of the claims 9 to 11, **characterised in that** the lubricating grease (39) is continuously injected over a period of time which corresponds to at least one complete rotation of the rotor (30).

14. The method according to any one of the claims 9 to 13, **characterised in that** the lubricating grease (39) is injected in a discontinuous manner over a period of time which corresponds to at least one complete rotation of the rotor (30), wherein the lubricating grease (39) is injected in particular when there is no rolling body (50, 51) of the rolling bearing (40) located between an outlet opening (38) of the device (37) for introducing lubricating grease and the raceway (41, 41').

15. The method according to any one of the claims 9 to 14, **characterised in that** a lubrication cycle is provided in which lubricating grease is applied for a first specifiable period of time, which is followed by a pause in the application of lubricating grease which is shorter than the first specifiable period of time, and then lubricating grease is applied again, in particular wherein the application of lubricating grease and the pause in the application of lubricating grease alternate several times, in particular at least 3 times, in succession, wherein preferably a lubricating grease relief phase is provided, in which provision is made for a relief in pressure of the lubricating grease, instead of the last pause in the application of lubricating grease.

## Revendications

1. Palier à roulement (40) d'une éolienne (1), dans lequel l'éolienne (1) comprend un arbre de rotor (13), qui est logé par le biais du palier à roulement (40) et qui est entraîné par un rotor éolique (22), dans lequel le palier à roulement (40) présente un rotor (30), qui est relié à l'arbre de rotor (13) de l'éolienne, dans lequel le palier à roulement (40) présente un stator (31), dans lequel un dispositif d'introduction de graisse (37) est reçu dans le stator (31), dans lequel le palier à roulement (40) présente en outre plusieurs corps de roulement (50, 51), qui sont agencés entre le stator (31) et le rotor (30), dans lequel le dispositif d'introduction de graisse (37) présente une ouverture de sortie (38) pour graisse (39), qui est orientée contre une voie de roulement (41, 41') du stator (31) ou rotor (30) ou une piste de roulement (48) d'au moins un corps de roulement (50, 51).

2. Palier à roulement (40) selon la revendication 1, **caractérisé en ce que** l'ouverture de sortie (38) est réalisée en tant que buse.

3. Palier à roulement (40) selon la revendication 1 ou 2, **caractérisé en ce qu'**une conduite de graisse (42) est prévue, qui présente à une extrémité de celle-ci l'ouverture de sortie (38), dans lequel la conduite de graisse (42) présente une section, qui est introduite dans le stator (31), dans lequel en particulier une partie (43) de la section est réalisée en tant que zone d'extrémité de la conduite de graisse (42), dans lequel la zone d'extrémité est coudée vers une autre partie (44) de la section selon un angle (a) de 10° à 50°, en particulier 20° à 40°.

4. Palier à roulement (40) selon l'une quelconque des revendications 1 à 3, **caractérisé en ce qu'**un dispositif de transport de graisse (45) est prévu, qui présente en particulier un dispositif (46) pour la formation d'une surpression, dans lequel en particulier le dispositif (46) pour la formation d'une surpression comprend un accumulateur de pression.

5. Palier à roulement (40) selon la revendication 3 ou 4, **caractérisé en ce qu'**une soupape, en particulier un clapet antiretour, est prévue dans le dispositif de transport de graisse (45) ou dans la conduite de graisse (42, 42'), dans lequel en particulier le dispositif (46) pour la formation d'une surpression comprend un pressostat et une électrovanne.

6. Palier à roulement (40) selon l'une quelconque des revendications 1 à 5, **caractérisé en ce que** plusieurs corps de roulement (50, 51) sont prévus entre le rotor (30) et le stator (31), dans lequel la distance de l'ouverture de sortie (38) par rapport à un corps de roulement (50) est inférieur à 25 %, en particulier inférieur à 15 %, d'un diamètre d'un corps de de roulement (50, 51), dans lequel en particulier le palier à roulement (40) est réalisé à plusieurs rangées, dans lequel le palier à roulement (40) est en particulier un roulement à rotule.

7. Palier à roulement (40) selon l'une quelconque des revendications 1 à 6, **caractérisé en ce que** le dispositif d'introduction de graisse (37) introduit la graisse (39) dans une zone au-dessus de l'axe de rotation (52) du palier à roulement (40) et en dessous du dixième supérieur du palier à roulement (40).

8. Palier à roulement (40) selon l'une quelconque des revendications 1 à 7, **caractérisé en ce que** le dispositif d'introduction de graisse (37) est agencé dans un côté frontal (35) du palier à roulement (40) de sorte que la graisse (39) est introduite du côté frontal (35) de l'extérieur dans le palier à roulement (40) et accède de là à l'intérieur (53) du palier à roulement (40).

9. Procédé pour faire fonctionner une éolienne, dans lequel l'éolienne comprend un palier à roulement (40), dans lequel le palier à roulement (40) présente un rotor (30), qui est relié à un arbre de rotor (13) de l'éolienne, dans lequel l'arbre de rotor (13) est logé par le biais du palier à roulement et le palier à roulement (40) est lubrifié avec de la graisse (39), **caractérisé en ce que** la graisse (39) est appliquée par un dispositif d'introduction de graisse (37) directement sur une voie de roulement (41, 41') du palier à roulement (40) et/ou sur une piste de roulement (48) d'un corps de roulement (50, 51) du palier à roulement (40).

10. Procédé selon la revendication 9, **caractérisé en ce que** la graisse (39) est appliquée d'un côté frontal (35) du palier à roulement (40) sur la voie de roulement (41, 41') et/ou la piste de roulement (48).

11. Procédé selon la revendication 9 ou 10, **caractérisé en ce que** l'application est un moulage par injection.

12. Procédé selon l'une quelconque des revendications 9 à 11, **caractérisé en ce que** la voie de roulement (41) est une voie de roulement (41) d'une bague intérieure (32) du palier à roulement (40).

13. Procédé selon l'une quelconque des revendications 9 à 11, **caractérisé en ce que** la graisse (39) est injectée en continu pendant une durée, qui correspond au moins à une rotation complète du rotor (30).

14. Procédé selon l'une quelconque des revendications 9 à 13, **caractérisé en ce que** la graisse (39) est injectée de manière discontinue pendant une durée, qui correspond au moins à une rotation complète du rotor (30), dans lequel la graisse (39) est injectée en particulier lorsqu'aucun corps de roulement (50, 51) du palier à roulement (40) n'est agencé entre une ouverture de sortie (38) du dispositif d'introduction de graisse (37) et la voie de roulement (41, 41').

15. Procédé selon l'une quelconque des revendications 9 à 14, **caractérisé en ce qu'**un cycle de lubrification est prévu, dans lequel de la graisse est appliquée pendant une première durée pouvant être prédéfinie, suivie d'une pause d'application de graisse, qui est inférieure à la première durée pouvant être prédéfinie et ensuite de la graisse est à nouveau appliquée, dans lequel en particulier l'application de graisse et la pause d'application de graisse s'alternent plusieurs fois l'une après l'autre, en particulier au moins 3 fois, dans lequel de préférence à la place de la dernière pause d'application de graisse une phase de décharge de graisse est prévue, lors de laquelle une décharge de pression de la graisse est prévue.
